# DEMANDE DE BREVET EUROPEEN

(11) **EP 1 312 561 A2**
(43) Date de publication de la demande: **21.05.2003**
(21) Numéro de dépôt: 02292400.5
(22) Date de dépôt: 30.09.2002
(51) Int. Cl.: B65D 47/20, B65D 47/28, B65D 47/44

(54) **Dispositif de conditionnement d'un produit, notamment un produit cosmétique et/ou de soins**

(30) Priorité: 01.10.2001 FR 0112599
(71) Demandeur: L'OREAL, 75008 Paris (FR)
(72) Inventeur: Gueret, Jean-Louis, 75016 Paris (FR)
(74) Mandataire: Tanty, François

(57) **Abrégé**

L'invention est relative à un dispositif de conditionnement d'un produit, notamment un produit cosmétique et/ou de soins, comprenant un récipient comportant une paroi élastiquement déformable permettant de faire varier son volume intérieur et un réducteur d'écoulement, caractérisé par le fait que le réducteur d'écoulement est réalisé au moins partiellement en un matériau compressible élastiquement déformable et comporte au moins un passage (11) sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution de produit, et par le fait que le réducteur d'écoulement est configuré de sorte que le volume du matériau compressible diminue lorsque le passage s'élargit depuis sa position fermée, au repos.

## Description

La présente invention concerne un dispositif de conditionnement d'un produit, notamment un produit cosmétique et/ou de soins, ce produit pouvant être un liquide ou une poudre.

Il est bien connu de munir les flacons contenant des liquides, par exemple des shampooings, de réducteurs d'écoulement destinés à ralentir, voire empêcher, la sortie du produit en cas de retournement accidentel du flacon.

On connaît ainsi par le brevet US 5 924 605 une tête de distribution comportant un réducteur d'écoulement se présentant sous la forme d'une membrane munie d'au moins une fente de distribution apte à s'ouvrir sous la poussée du produit et à revenir dans une position initiale fermée, lorsque cesse cette poussée.

Le brevet français FR 2 771 078 décrit une tête de distribution permettant de rendre la sortie du produit plus progressive, comportant un réducteur d'écoulement constitué par une membrane pourvue d'une fente dont les bords sont non jointifs au repos.

Les publications FR-A-2 284 533 et US 5 186 368 décrivent encore d'autres réducteurs d'écoulement.

On connaît par ailleurs un grand nombre de dispositifs de conditionnement et d'application comportant un applicateur à introduire dans le récipient et un organe d'essorage réalisé en mousse. La demande internationale WO 97/31553, par exemple, décrit de tels dispositifs.

On connaît également des dispositifs de conditionnement et d'application comportant des éléments d'application en mousse. Le brevet US 3 226 762 décrit un dispositif destiné à l'application de cirage, comportant un corps cylindrique et un piston mobile dans ce corps. Le produit est distribué à travers un bloc de mousse traversé par une pluralité de trous.

Le brevet britannique GB 470 101 décrit un récipient constitué d'un tube en métal pliable ou un tube rigide muni d'un piston. L'orifice de distribution du tube est fermé par deux blocs en matériau déformable, lesquels peuvent s'écarter afin de ménager un passage pour laisser sortir le produit contenu dans le tube. Les deux blocs viennent en appui latéralement contre le col du tube et à leur extrémité supérieure contre une paroi transversale.

Le brevet britannique GB 869 580 décrit un récipient pour distribuer par exemple des graines ou des pilules, comportant un bouchon en matière déformable muni d'une fente fermée au repos, cette fente pouvant s'ouvrir lorsqu'un utilisateur applique une pression au moyen de ses doigts sur les deux côtés de la fente.

Le brevet US 2 232 140 décrit un tube pliable comportant un orifice de distribution fermé par un disque en matière déformable, disposé à l'extérieur du tube et présentant une fente pouvant s'ouvrir lors de la distribution du produit.

Il existe un besoin pour bénéficier d'un nouveau dispositif de conditionnement comportant un réducteur d'écoulement, qui soit relativement simple et peu coûteux à réaliser, tout en permettant de distribuer facilement la quantité de produit voulue.

L'invention répond à ce besoin grâce à un dispositif de conditionnement d'un produit, notamment un produit cosmétique et/ou de soins, comprenant un récipient de volume intérieur variable et un réducteur d'écoulement, pouvant être caractérisé par le fait que le réducteur d'écoulement est réalisé au moins partiellement en un matériau compressible élastiquement déformable et comporte au moins un passage sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution du produit.

Le réducteur d'écoulement peut être configuré de telle sorte que le volume du matériau compressible diminue lorsque le passage s'élargit depuis sa position fermée, au repos.

Le fait que le passage soit sensiblement fermé au repos peut permettre d'éviter une fuite importante de produit, notamment en cas de retournement du récipient.

Ainsi, le réducteur d'écoulement peut être apte à empêcher l'écoulement du produit par gravité lorsque le récipient est tête en bas.

La compression du matériau, lorsque le passage s'élargit sous l'effet de la pression du produit, peut avoir lieu notamment dans des directions sensiblement perpendiculaires à la direction d'écoulement du produit.

Le matériau du réducteur d'écoulement peut être par exemple cellulaire ou fibreux, comportant par exemple une mousse ou un feutre, être poreux ou non, absorbant vis-à-vis du produit ou non.

L'élasticité du matériau permet audit au moins un passage de retourner à l'état sensiblement fermé lorsque cesse la distribution de produit.

Le réducteur d'écoulement peut par exemple être réalisé entièrement en mousse avec un coût de revient relativement faible. Il peut en effet s'avérer moins coûteux de rapporter un bloc de mousse que de réaliser une membrane en élastomère par bi-injection ou surmoulage.

L'utilisation d'un matériau compressible peut permettre également d'éviter plus facilement les risques de sortie brutale du produit, notamment lorsque ce matériau présente une certaine porosité et déformabilité. Ainsi, il peut être plus facile de distribuer la quantité souhaitée de produit.

Le réducteur d'écoulement peut être perméable à l'air ou non lorsque ledit au moins un passage est fermé. Lorsque le réducteur d'écoulement est perméable à l'air, et que ledit au moins un passage est fermé, la perméabilité à l'air du réducteur d'écoulement peut être mise à profit pour faciliter la reprise d'air dans le récipient après la distribution de produit. En particulier, le réducteur d'écoulement peut être réalisé avec des cellules ouvertes. La perméabilité du réducteur d'écoulement à l'air peut également faciliter, éventuellement, le remplissage du récipient au moyen d'une seringue dont l'embout serait introduit dans ledit au moins un passage, la sortie d'air lors du remplissage pouvant s'effectuer à travers le réducteur d'écoulement, grâce à sa perméabilité à l'air.

Le dispositif peut comporter un espace permettant une reprise d'air à travers une surface latérale du réducteur d'écoulement. Le dispositif peut ainsi comporter, par exemple, un espace annulaire libre autour du réducteur d'écoulement.

Un tel espace peut faciliter l'écoulement de l'air lors de la reprise d'air.

Les dimensions dudit au moins un passage, notamment sa longueur mesurée parallèlement à un axe du réducteur d'écoulement, sa largeur, son épaisseur et/ou son diamètre, et/ou la densité du matériau compressible et sa nature, peuvent être choisies en fonction du débit souhaité. Elles peuvent également être choisies de manière à empêcher un écoulement par gravité du produit à travers ledit réducteur d'écoulement, en l'absence de réduction du volume intérieur du récipient.

Le réducteur d'écoulement peut comporter ou être constitué par un bloc de matériau compressible ayant une section transversale, perpendiculairement à l'axe dudit au moins un passage, de forme générale choisie parmi : une forme carrée, une forme rectangulaire, une forme ovale, une forme circulaire, cette liste n'étant pas limitative.

Le réducteur d'écoulement peut comporter au moins un renfoncement du côté de la sortie du produit ou du côté intérieur du récipient, dans lequel débouche ledit au moins un passage.

Ce renfoncement peut présenter une forme généralement conique, convergeant vers ledit au moins un orifice, ou une forme généralement cylindrique, notamment cylindrique de révolution. Il peut se situer du côté intérieur ou extérieur du récipient.

Dans un exemple de mise en oeuvre de l'invention, le réducteur d'écoulement comporte deux renfoncements situés de part et d'autre dudit au moins un passage.

Dans un autre exemple de mise en oeuvre de l'invention, le réducteur d'écoulement comporte une surface sensiblement plane au moins du côté extérieur ou intérieur du récipient.

Le réducteur d'écoulement peut aussi comporter, du côté extérieur ou intérieur du récipient, une protubérance au sommet de laquelle débouche ledit au moins un passage, cette protubérance étant réalisée par exemple du côté extérieur du récipient pour servir à l'application et/ou interagir avec un élément de fermeture du récipient. La protubérance peut permettre également de diriger plus facilement le produit sortant vers la main de l'utilisateur, par exemple.

Le réducteur d'écoulement peut présenter une hauteur supérieure ou égale à la plus grande dimension de sa section transversale, mais il peut aussi présenter une hauteur inférieure ou égale à la plus grande dimension de sa section transversale. La hauteur du réducteur d'écoulement pourra être choisie en fonction de la perte de charge que l'on souhaite créer lors de la distribution, du débit souhaité, et/ou en fonction du mode de montage du réducteur d'écoulement sur le récipient.

Dans un exemple de mise en oeuvre de l'invention, le réducteur d'écoulement comporte un seul passage, c'est-à-dire par exemple un trou ou une fente unique. En variante, il peut comporter une pluralité de passages, par exemple une pluralité de fentes se coupant ou se rejoignant à une extrémité, par exemple au moins deux fentes se croisant en leur milieu. Le réducteur d'écoulement peut encore comporter au moins trois fentes ayant une extrémité commune, équi-angulairement réparties autour d'un axe du réducteur d'écoulement.

Le réducteur d'écoulement peut comporter au moins un passage réalisé sans enlèvement de matière.

Le montage du réducteur d'écoulement peut s'effectuer de multiples manières.

Le réducteur d'écoulement peut par exemple être fixé par une face d'extrémité située du côté intérieur du récipient ou en variante tournée vers l'extérieur du récipient. Cette fixation peut être réalisée par exemple par collage, soudage, serrage, bouterolage, éventuellement au moyen d'une ou plusieurs pièces rapportées, cette ou ces dernières étant par exemple soudée(s), collée(s) ou encliquetée(s), cette liste n'étant pas limitative.

Le réducteur d'écoulement peut être fixé par une face orientée transversalement à un axe dudit au moins un passage, sur une paroi de support. Cette paroi peut présenter une nervure annulaire engagée dans le réducteur d'écoulement.

Le réducteur d'écoulement peut comporter un bloc de matériau compressible unique. En variante, le réducteur d'écoulement peut comporter une structure multicouche. L'une au moins des couches de cette structure peut présenter une densité différente de celle des autres couches ou être réalisée dans un matériau différent de celui des autres couches. En particulier, l'une des couches peut être réalisée avec une perméabilité à l'air suffisante pour permettre une reprise d'air aisée. La couche en question peut être par exemple celle qui est la plus proche de l'orifice de sortie.

Dans un exemple de mise en oeuvre de l'invention, le réducteur d'écoulement peut définir une surface apte à servir à l'application du produit. En variante, le réducteur d'écoulement ne sert pas à l'application du produit, par exemple parce qu'il ne comporte aucune partie susceptible d'être amenée au contact de la surface à traiter. En particulier, le réducteur d'écoulement peut se situer par exemple en retrait d'une surface supérieure du dispositif. Ce dernier peut être agencé de manière à pouvoir distribuer du produit sans appui du réducteur d'écoulement contre une surface externe au dispositif, par exemple la peau.

Le réducteur d'écoulement peut être apte à épouser la forme intérieure d'un bouchon fermant le récipient. Dans ce cas, le réducteur d'écoulement peut être, par exemple, comprimé par le bouchon lorsque ce dernier est en place, et se détendre lors du retrait du bouchon. La compression du réducteur d'écoulement lorsque le bouchon est en place peut être utile, par exemple, pour diminuer les quantités de produit et d'air emmagasinées dans le matériau compressible en l'absence d'utilisation.

Dans un exemple de mise en oeuvre de l'invention, le réducteur d'écoulement est fixé de manière inamovible, directement ou indirectement, sur le récipient. Le réducteur d'écoulement peut par exemple être fixé sur un insert rapporté dans un col du récipient ou, en variante, être fixé sur un support mobile par rapport au corps du récipient, un tel support constituant par exemple une partie d'un organe de fermeture.

Le col du récipient peut être fileté afin de permettre le vissage d'un bouchon, par exemple. Le récipient peut comporter une capsule reliée au corps du récipient par une charnière et le réducteur d'écoulement peut, le cas échéant, être fixé directement ou indirectement sur ladite capsule. Cette capsule peut permettre, en étant enlevée du col du récipient, de remplir le récipient plus facilement.

Dans un exemple de mise en oeuvre de l'invention, le réducteur d'écoulement comporte une ou plusieurs faces recouvertes d'un revêtement de type flocage, tissé ou non-tissé, ce revêtement étant par exemple destiné à améliorer le confort à l'application et/ou l'esthétique du réducteur d'écoulement.

Le récipient comporte avantageusement une paroi élastiquement déformable, sur laquelle l'utilisateur peut appuyer pour réduire le volume intérieur du récipient. Le récipient peut reprendre sa forme initiale une fois relâché par l'utilisateur.

Le récipient peut présenter une section transversale généralement allongée, par exemple de forme ovale, et présenter deux faces principales sur lesquelles l'utilisateur peut appuyer pour réduire le volume intérieur du récipient. La déformabilité du récipient peut, par exemple, être suffisante pour que les portions de paroi définissant lesdites faces puissent venir au contact l'une de l'autre lorsque l'utilisateur appuie à fond sur le récipient.

Le dispositif peut comporter un mécanisme d'obturation comportant un élément d'obturation mobile, notamment en translation ou en rotation, en plus du réducteur d'écoulement, pour empêcher une distribution de produit en cas de pression accidentelle sur la paroi du récipient, par exemple. Un tel mécanisme d'obturation peut permettre d'éviter d'utiliser un bouchon, par exemple.

Le réducteur d'écoulement peut être fixé sur un élément d'obturation mobile par rapport au corps du récipient, par exemple mobile en translation, entre une première position permettant au produit contenu dans le récipient de quitter ce dernier et une deuxième empêchant le produit contenu dans le récipient de quitter ce dernier. Le réducteur d'écoulement peut être par exemple situé en aval de l'élément d'obturation, eu égard au sens d'écoulement du produit. Il peut aussi être disposé en amont.

Le dispositif de conditionnement et de distribution selon l'invention peut aussi, dans certains exemples de réalisations, comporter un élément d'obturation mobile en rotation par rapport au corps du récipient, permettant d'interrompre ou non l'écoulement du produit contenu dans le récipient vers la sortie, voire vers le réducteur d'écoulement si celui-ci est disposé sur le trajet du produit gagnant la sortie.

Le dispositif de conditionnement et de distribution selon l'invention peut encore, dans certaines réalisations, être dépourvu d'organe de fermeture apte à isoler le réducteur d'écoulement de l'extérieur.

Le récipient peut présenter une contenance comprise par exemple entre environ 50 ml et environ 600 ml, notamment entre environ 200 ml et environ 600 ml, et contenir par exemple l'un des produits suivants : un gel douche, un shampooing, un lait corporel, une huile, cette liste n'étant pas limitative.

On aura bien compris que la distribution du produit se fait en diminuant le volume intérieur du récipient, sans introduire d'élément d'application dans le récipient au travers du réducteur d'écoulement, ce dernier n'étant pas un essoreur.

Le réducteur d'écoulement peut être réalisé à partir ou dans un matériau cellulaire ou fibreux, par exemple une mousse de polyuréthane, de polyester, de polyéther, de PVC, de NBR, un feutre ou un composite multicouche, et présenter le cas échéant des propriétés hydrophiles ou hydrophobes.

Le réducteur d'écoulement peut contenir une charge d'agents biocides, par exemple des sels métalliques.

Le réducteur d'écoulement peut également contenir une charge de particules magnétiques ou magnétisables.

Le réducteur d'écoulement peut être situé dans un logement de volume variable ou fixe.

L'invention a encore pour objet, selon un autre de ses aspects, un dispositif de conditionnement d'un produit, notamment un produit cosmétique et/ou de soins, comprenant un récipient comportant une paroi élastiquement déformable permettant de faire varier son volume intérieur et un réducteur d'écoulement, le réducteur d'écoulement étant réalisé au moins partiellement en un matériau compressible élastiquement déformable et comportant au moins un passage sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution du produit.

Le réducteur d'écoulement peut être configuré de sorte que le volume du matériau compressible diminue lorsque le passage s'élargit depuis sa position fermée, au repos.

L'invention a encore pour objet, selon un autre de ses aspects, un dispositif de conditionnement d'un produit, notamment un produit cosmétique et/ou de soins, comprenant un récipient de volume intérieur variable et un réducteur d'écoulement réalisé au moins partiellement en un matériau compressible élastiquement déformable perméable à l'air et comportant au moins un passage sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution du produit.

L'invention a encore pour objet, selon un autre de ses aspects, un dispositif de conditionnement d'un produit, notamment un produit cosmétique et/ou de soins, comprenant un récipient de volume intérieur variable et un réducteur d'écoulement réalisé au moins partiellement en un matériau compressible élastiquement déformable et comportant au moins un passage sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution de produit, le dispositif comportant un espace annulaire entourant le matériau compressible du réducteur d'écoulement sur une partie au moins de sa hauteur.

L'espace annulaire peut se situer entre le matériau compressible et le col, ou en variante, entre le matériau compressible et la paroi d'un insert introduit dans le col du récipient.

L'invention a encore pour objet, selon un autre de ses aspects, un dispositif de conditionnement d'un produit, notamment un produit cosmétique et/ou de soins, comprenant un récipient de volume intérieur variable et un réducteur d'écoulement réalisé au moins partiellement en un matériau compressible élastiquement déformable et comportant au moins un passage sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution de produit, le réducteur d'écoulement étant fixé au reste du dispositif de manière à ne pas limiter sa compressibilité sous l'effet de la pression du produit.

L'invention a encore pour objet, selon un autre de ses aspects, un dispositif de distribution d'un produit, comprenant :
- un récipient définissant un volume intérieur variable,
- un réducteur d'écoulement présentant une longueur et une hauteur et comportant au moins un passage, le réducteur d'écoulement comprenant au moins partiellement un matériau compressible élastiquement déformable, et
- un espace défini par au moins une portion du dispositif, l'espace entourant au moins partiellement le matériau compressible sur au moins une partie de la hauteur du réducteur d'écoulement,
caractérisé par le fait qu'au moins une portion du réducteur d'écoulement est en communication fluidique avec l'espace,
et par le fait que ledit au moins un passage est sensiblement fermé en au moins un point de sa longueur lorsque le réducteur d'écoulement est dans une position de repos sensiblement fermée, ledit au moins un passage étant configuré de manière à s'élargir lorsque ledit matériau compressible est comprimé par le produit lorsque le volume intérieur du récipient est réduit, de manière à permettre la distribution du produit par ledit au moins un passage.

L'invention a encore pour objet, selon un autre de ses aspects, un dispositif de distribution d'un produit, comprenant :
- un récipient définissant un volume intérieur variable, et
- un réducteur d'écoulement présentant une longueur et comportant au moins un passage, le réducteur d'écoulement comprenant au moins partiellement un matériau compressible élastiquement déformable,
caractérisé par le fait que ledit au moins un passage est sensiblement fermé en au moins un point de sa longueur lorsque le réducteur d'écoulement est au repos, le passage étant configurée de manière à s'élargir lorsque le matériau compressible est comprimé par le produit lorsque le volume intérieur du récipient est réduit, de manière à permettre la distribution du produit par ledit au moins un passage,
par le fait que le réducteur d'écoulement est fixé à une portion du dispositif de sorte que la compressibilité du matériau compressible ne soit pas limitée lorsque le matériau est comprimé par le produit, et
par le fait que le réducteur d'écoulement est configuré de manière à ce que le volume du matériau compressible diminue lorsque ledit au moins un passage s'élargit depuis sa position fermée, au repos.

L'invention a encore pour objet, selon un autre des ses aspects, un dispositif de distribution d'un produit, comportant :
- un récipient comportant au moins une paroi élastiquement déformable permettant de faire varier son volume intérieur, et
- un réducteur d'écoulement présentant une longueur et comportant au moins un passage, le réducteur d'écoulement comprenant au moins partiellement un matériau compressible élastiquement déformable,
caractérisé par le fait que ledit au moins un passage est sensiblement fermé en au moins un point de sa longueur lorsque le réducteur d'écoulement est au repos, ledit au moins un passage étant configuré de manière à s'élargir lorsque le matériau compressible est au moins partiellement comprimé sous l'effet de la pression du produit lorsque le volume intérieur du récipient diminue, de manière à permettre la distribution de produit par ledit au moins un passage, et
par le fait que le matériau compressible comporte une mousse.

L'invention sera mieux comprise à la lecture de la description détaillée qui va suivre, d'exemples de mise en oeuvre de l'invention non limitatifs, et à l'examen du dessin annexé, sur lequel :
- la figure 1 est une vue schématique et partielle, en coupe axiale, d'un dispositif de conditionnement et de distribution conforme à un premier exemple de mise en oeuvre de l'invention,
- la figure 2 est une section transversale du récipient selon II-II de la figure 1,
- les figures 3 à 10 illustrent quelques variantes de réalisation et de fixation du réducteur d'écoulement,
- les figures 11 à 15 illustrent différentes formes de passages parmi d'autres pour le réducteur d'écoulement,
- la figure 16 représente, schématiquement et partiellement, en coupe axiale, un dispositif conforme à un autre exemple de mise en oeuvre de l'invention,
- la figure 17 représente une variante du dispositif de la figure 16,
- les figures 18 à 20 représentent, schématiquement et partiellement, en coupe axiale, des dispositifs conformes à d'autres exemples de mise en oeuvre de l'invention,
- la figure 21 représente une variante du dispositif de la figure 20,
- la figure 22 représente, schématiquement et partiellement, en coupe axiale, un dispositif conforme à un autre exemple de mise en oeuvre de l'invention,
- la figure 23 représente, schématiquement et partiellement, en perspective, un dispositif conforme à un autre exemple de mise en oeuvre de l'invention,
- la figure 24 est une vue schématique et partielle, en coupe axiale, d'un détail du dispositif de la figure 23,
- la figure 25 représente, schématiquement et partiellement, en coupe axiale, un dispositif conforme à un autre exemple de mise en oeuvre de l'invention,
- la figure 26 représente, schématiquement et partiellement, en coupe axiale partielle, un dispositif conforme à un autre exemple de mise en oeuvre de l'invention,
- la figure 27 représente le dispositif de la figure 26, le bouchon étant retiré,
- les figures 28 à 30 représentent, schématiquement et partiellement, des dispositifs conformes à d'autres exemples de mise en oeuvre de l'invention,
- les figures 31 à 33 illustrent schématiquement différentes formes de sections transversales pour le réducteur d'écoulement, parmi d'autres, et
- les figures 34 et 35 représentent en section axiale des passages se présentant sous forme de fentes de largeur variable.

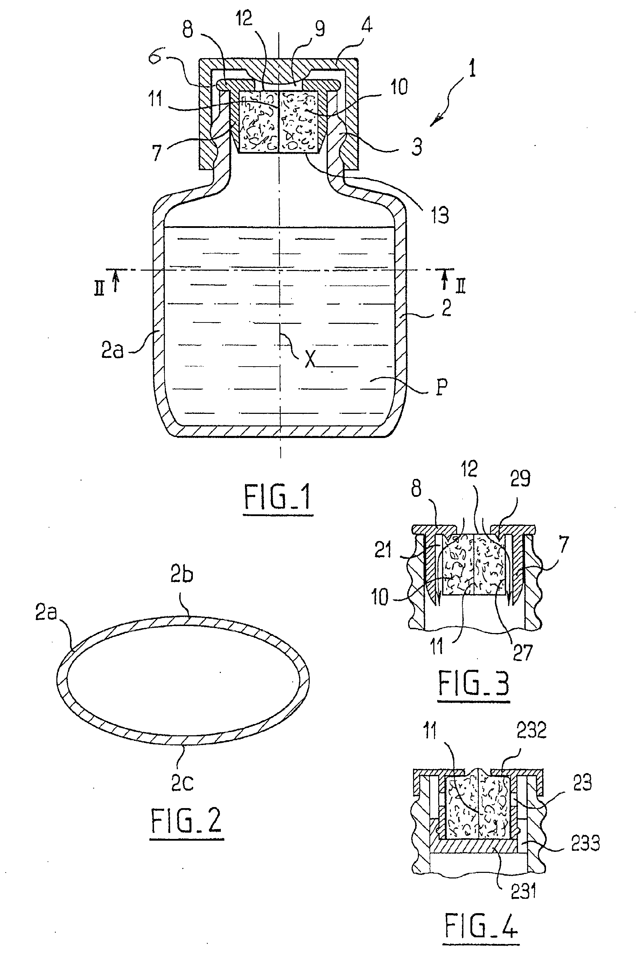

On a représenté sur la figure 1 un dispositif de conditionnement 1 conforme à un premier exemple de mise en oeuvre de l'invention.

Ce dispositif 1 comporte un récipient 2, d'axe X, pourvu en partie supérieure d'un col 3 fileté extérieurement, permettant le vissage d'un capuchon de fermeture 4.

Le récipient 2 contient un produit liquide P, par exemple un gel douche, un shampooing, un lait corporel ou une huile. L'invention n'est pas limitée à un produit particulier, et ce produit P pourrait encore avoir une consistance non plus liquide mais pulvérulente.

Dans l'exemple considéré, le récipient 2 comporte un corps ayant une paroi tubulaire 2a présentant, comme on peut le voir sur la figure 2, une section transversale sensiblement ovale, définissant deux faces principales 2b et 2c. La paroi tubulaire 2a est réalisée dans une matière plastique élastiquement déformable. Le récipient 2 présente, dans l'exemple illustré, un fond plat.

Un utilisateur peut réduire le volume intérieur du récipient 2 en comprimant la paroi tubulaire 2a en appuyant avec les doigts sur les faces 2b et 2c. Lors de cette compression, les portions opposées de la paroi 2a définissant les faces principales 2b et 2c peuvent éventuellement venir au contact l'une de l'autre, si la souplesse de la paroi 2a le permet. Lorsque la paroi 2a est relâchée, le récipient tend à reprendre par élasticité sa forme initiale.

Dans l'exemple illustré, le col 3 reçoit un insert 6, comportant une jupe tubulaire 7 engagée à force dans le col 3 et se raccordant supérieurement à un plateau 8, ce dernier étant traversé par un orifice de sortie central 9. Le plateau 8 vient reposer à sa périphérie contre la tranche supérieure du col 3. La jupe tubulaire 7 s'applique de manière étanche sur la surface intérieure du col 3.

Le dispositif 1 comporte un réducteur d'écoulement 10, réalisé en mousse par exemple, présentant dans l'exemple considéré une forme sensiblement cylindrique de révolution, d'axe X, et fixé au plateau 8 de l'insert 6 par sa face supérieure 12. Dans une variante, le réducteur d'écoulement 10 pourrait être fixé additionnellement ou uniquement, à la jupe tubulaire 7. Le réducteur d'écoulement 10 peut être fixé à l'insert 6 par collage ou soudage, par exemple.

Dans l'exemple illustré, le réducteur d'écoulement 10 comporte un bloc de mousse unique, réalisé par exemple en polyuréthane, en polyester, en polyéther, en PVC ou en NBR, cette liste n'étant pas limitative. D'une manière générale, la mousse peut être à cellules ouvertes, semi-ouvertes ou fermées. Une mousse à cellules ouvertes facilite la reprise d'air, lorsque le récipient retourne à son volume initial.

Le réducteur d'écoulement est traversé par un passage 11 qui, au repos, est sensiblement fermé, au moins en un point de sa longueur, et qui peut s'ouvrir sous la pression du produit.

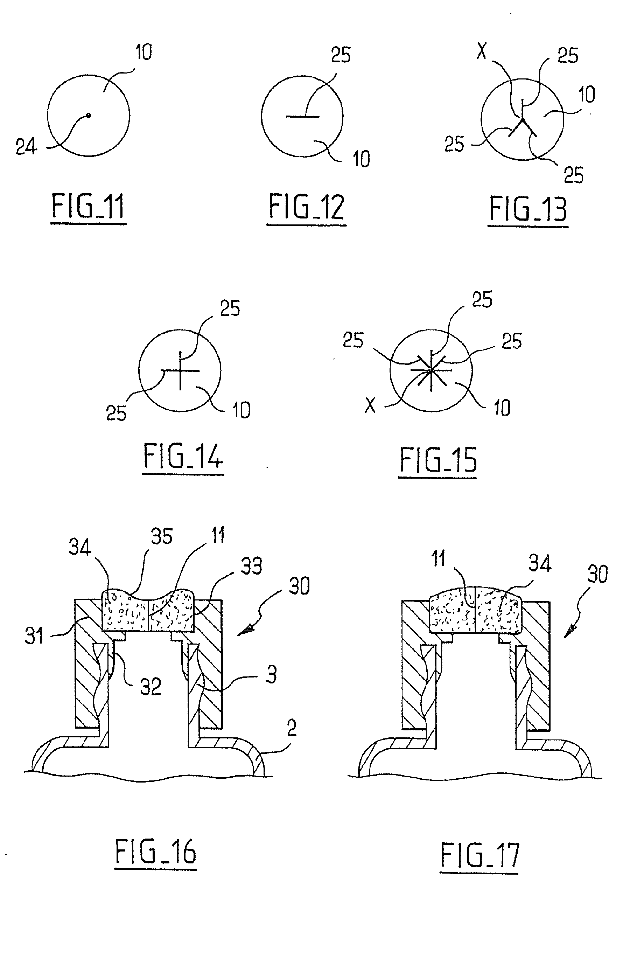

Le passage 11 peut être constitué par exemple par un seul trou 24 d'axe X, comme illustré sur la figure 11.

Le réducteur d'écoulement 10 peut aussi comporter par exemple une ou plusieurs fentes au lieu d'un trou, par exemple une fente 25 unique, comme cela est illustré à la figure 12. Une telle fente peut comporter des bords sensiblement rectilignes et sensiblement jointifs au repos, ces bords étant alignés selon un diamètre par exemple, le centre de la fente coïncidant par exemple avec l'axe X du réducteur d'écoulement. La fente 25 peut s'étendre sur tout un diamètre ou sur une partie seulement du diamètre.

Le réducteur d'écoulement peut aussi comporter, comme représenté à la figure 13, trois fentes 25 ayant une extrémité commune, coïncidant avec l'axe X, par exemple équi-angulairement réparties autour de cet axe X.

En variante encore, comme illustré à la figure 14, l'organe 10 peut comporter deux fentes 25, perpendiculaires entre elles et se croisant en leur milieu.

En variante encore, comme illustré à la figure 15, le réducteur d'écoulement 10 peut comporter trois fentes 25 se croisant en leur milieu et équi-angulairement réparties autour de l'axe X.

D'autres formes de passages 11 peuvent encore être réalisées à travers la mousse du réducteur d'écoulement, par exemple des combinaisons de trous circulaires ou non et/ou de fentes, ces passages pouvant être réalisés avec enlèvement de matière ou non.

Dans l'exemple illustré à la figure 1, le réducteur d'écoulement 10 présente une hauteur inférieure au diamètre de sa section transversale, et la face supérieure 12 du réducteur d'écoulement 10 se situe en retrait de la surface supérieure de l'insert 6, les faces supérieure 12 et inférieure 13 du réducteur d'écoulement 10 étant sensiblement planes. La surface latérale du réducteur d'écoulement est au contact de la surface radialement intérieure de la jupe tubulaire 7.

Afin de faciliter la reprise d'air, un espace 21 peut avantageusement être ménagé entre la surface latérale 27 du réducteur d'écoulement et la jupe tubulaire 7, comme illustré sur la figure 3. Sur cette figure, l'espace 21 est annulaire mais pourrait, en variante, se présenter sous une forme différente, par exemple sous la forme d'un canal de section demi-circulaire ou autre.

Dans l'exemple de la figure 3, le réducteur d'écoulement 10 est fixé par sa face supérieure sous le plateau 8. L'insert 7 comporte une nervure annulaire 29 s'étendant sous le plateau 8, qui est chauffée lorsque le réducteur d'écoulement est soudé sur l'insert.

On comprend que dans l'exemple de la figure 3, lors de la reprise d'air, l'air peut circuler de manière préférentielle à travers la surface latérale 27, pour gagner l'espace 21.

Pour illustrer le fait que l'entrée du produit dans le réducteur d'écoulement pourrait s'effectuer ailleurs que dans l'axe du passage 11, on a représenté sur la figure 4 une variante de réalisation dans laquelle le réducteur d'écoulement est logé dans une cage qui présente des ouvertures latérales 23. Cette cage est formée par deux pièces 231 et 232 encliquetées l'une dans l'autre. La pièce 231, qui définit le fond du logement qui contient le réducteur d'écoulement, comporte des ouvertures 233 qui permettent au produit contenu dans le récipient de gagner les ouvertures 23. Dans une variante non illustrée, le fond de la pièce 231 est traversé par un orifice.

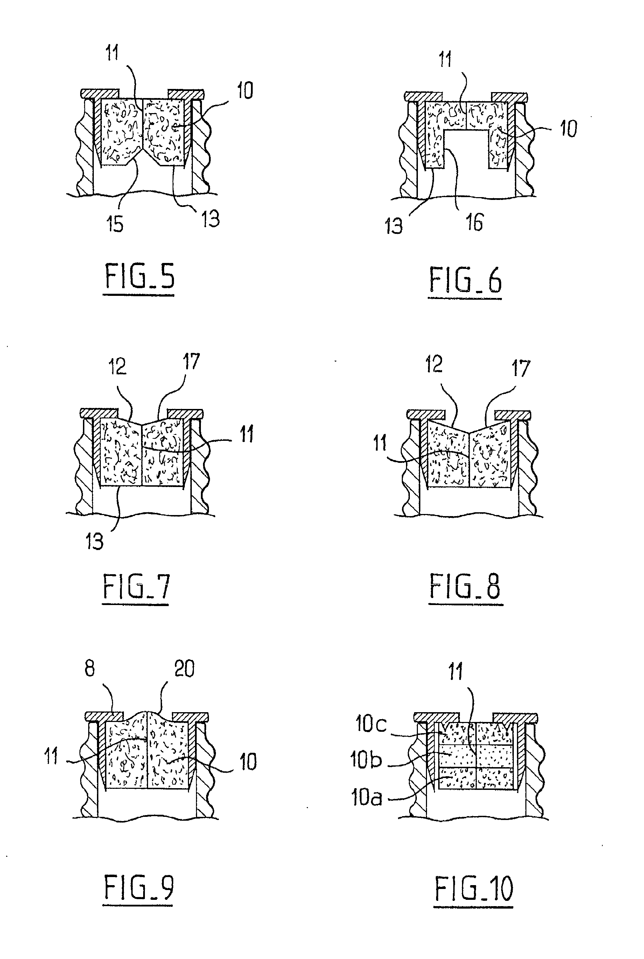

Le réducteur d'écoulement n'est pas limité à une forme particulière et peut, comme illustré à la figure 5, comporter sur sa face inférieure 13, dirigée vers l'intérieur du récipient, un renfoncement 15 au fond duquel débouche le passage 11.

Ce renfoncement 15 peut présenter par exemple une forme généralement conique, convergeant vers le passage 11 ou, en variante, comme illustré à la figure 6, présenter une forme cylindrique 16, notamment cylindrique de révolution. La forme du renfoncement 15 pourra être choisie en fonction de la nature du produit et du débit souhaité, par exemple.

En variante, la face inférieure 13 peut être plane et la face supérieure 12 comporter un renfoncement 17, par exemple de forme généralement conique convergeant vers le passage 11, comme illustré à la figure 7.

Le renfoncement 17 peut s'étendre sur une partie seulement de la face supérieure 12, comme c'est le cas de l'exemple de réalisation de la figure 7 ou, en variante, comme illustré à la figure 8, s'étendre sur la totalité de la surface supérieure 12. Le renfoncement 17 peut permettre, par exemple, à l'utilisateur de voir le produit commencer à sortir du réducteur d'écoulement avant que le produit ne quitte l'insert, lorsque le récipient est tête en haut. Un tel renfoncement peut également faciliter, par exemple, le remplissage du récipient au moyen d'une seringue dont l'embout est engagé dans le passage 11.

Le renfoncement 17 peut encore faciliter le drainage du produit vers le passage 11 lorsque le récipient est tête en haut et relâché, par exemple.

La présence d'un ou de plusieurs renfoncements peut aussi faciliter l'ouverture du passage 11 sous la pression du produit, par exemple rendre plus aisé l'écartement des bords de la fente lorsque le passage 11 est une fente.

Le réducteur d'écoulement 10 peut également comporter, comme on peut le voir sur la figure 9, sur l'une de ses faces inférieure 13 ou supérieure 12, voire sur chacune d'elles, une protubérance 20 au sommet de laquelle débouche le passage 11. Une telle protubérance peut servir par exemple à canaliser le produit vers la sortie, au travers de l'ouverture de l'insert. La protubérance 20 peut résulter par exemple d'une compression de la mousse contre le plateau 8 lors de sa fixation sur l'insert.

On ne sort pas du cadre de la présente invention en réalisant un réducteur d'écoulement comportant une structure multicouche, par exemple comme illustré à la figure 10, avec plusieurs couches 10a, 10b et 10c superposées dans le sens de l'axe X et par exemple toutes réalisées dans des matériaux différents. En variante, certaines couches peuvent être réalisées dans le même matériau. Les couches 10a, 10b, 10c peuvent présenter des densités différentes. La couche 10c la plus proche de l'orifice de sortie peut présenter la densité la plus faible, afin par exemple de faciliter le passage de l'air lors de la reprise d'air, un espace pour le passage de l'air pouvant être réalisé autour du réducteur d'écoulement, à l'instar du mode de réalisation de la figure 3. La couche 10c peut également permettre l'emploi, par exemple, d'un matériau plus facile à assembler avec une paroi de support, par exemple le plateau 8 de l'insert 7. Le nombre de couches superposées peut être quelconque, et être par exemple égal à deux, trois, quatre ou plus.

Le ou les matériaux formant le réducteur d'écoulement ainsi que les caractéristiques du ou des passages réalisés à travers lui seront avantageusement choisis de manière à empêcher un écoulement par gravité du produit à travers celui-ci.

Le réducteur d'écoulement peut être fixé sur le récipient autrement qu'au moyen d'un insert introduit dans le col du récipient.

A titre d'exemple, on a représenté partiellement sur la figure 16 un dispositif 30 conforme à un autre exemple de mise en oeuvre de l'invention, comportant un récipient 2 muni d'un col fileté 3 sur lequel une capsule 31 est vissée. Dans une variante non illustrée, cette capsule pourrait être encliquetée sur le col du récipient.

La capsule 31 comporte une lèvre d'étanchéité intérieure 32, venant s'appliquer contre la paroi intérieure du col 3.

La capsule 31 définit à sa partie supérieure un logement 33 permettant de recevoir un réducteur d'écoulement qui est fixé sur la capsule 31 par exemple par sa face inférieure, dirigée vers l'intérieur du récipient.

Le réducteur d'écoulement 34 peut dépasser de la capsule 31 comme représenté, et comporter par exemple un relief 35 sur sa face supérieure, par exemple un renfoncement.

Le réducteur d'écoulement 34 est traversé par un passage 11, qui peut être un trou ou une fente, par exemple, ce passage 11 pouvant déboucher au fond du renfoncement 34.

Le dispositif 30 peut être par exemple dépourvu de capuchon de fermeture, le réducteur d'écoulement 34 pouvant par exemple être réalisé de manière à empêcher l'écoulement par gravité du produit vers l'extérieur et assurer une certaine fermeture étanche au repos. Le matériau du réducteur d'écoulement peut être à cellules fermées, par exemple.

Lorsque le réducteur d'écoulement fait saillie hors de la capsule 31, la partie qui dépasse de la capsule 31 peut présenter une forme autre que celle représentée à la figure 14, par exemple une forme bombée vers l'extérieur, comme illustré sur la figure 17. Sur cette figure, on voit que le réducteur d'écoulement 34 présente une protubérance convexe vers l'extérieur. Une telle protubérance peut permettre de canaliser le produit qui sort.

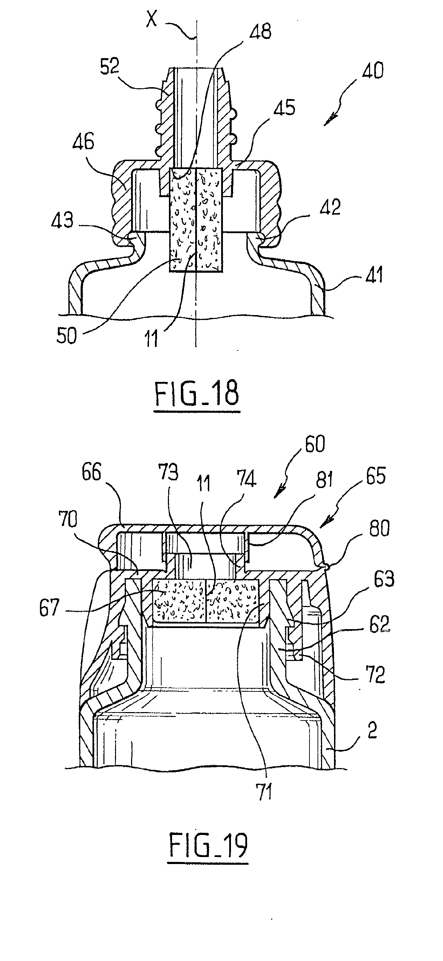

On a représenté, sur la figure 18, un dispositif 40 conforme à un autre exemple de mise en oeuvre de l'invention.

Ce dispositif 40 comporte un récipient 41, pourvu à sa partie supérieure d'un col 42, terminé par un bourrelet annulaire 43.

Le dispositif 40 comporte une capsule 45 qui comporte à sa partie inférieure une jupe 46 fixée par encliquetage sur le bourrelet 43 précité.

La capsule 45 comporte également une lèvre intérieure 48, formant saillie vers le bas et permettant de positionner et de maintenir le réducteur d'écoulement 50, de forme cylindrique d'axe X.

Le réducteur d'écoulement 50 est traversé par un passage 11, par exemple un trou ou une ou plusieurs fentes.

La capsule 45 comporte en outre un embout 52 qui peut éventuellement servir au montage d'un capuchon de fermeture, non représenté.

Dans l'exemple décrit, le réducteur d'écoulement 50 présente une hauteur supérieure à son diamètre. Le réducteur d'écoulement 50 est libre sur une majeure partie de sa hauteur, sa longueur étant supérieure à celle de la lèvre 48.

On a représenté, sur la figure 19, un dispositif 60 conforme à un autre exemple de mise en oeuvre de l'invention.

Ce dispositif 60 comporte, comme ceux précédemment décrits, un récipient 2 à paroi compressible.

Ce dernier présente un col 62 muni d'un bourrelet d'encliquetage 63.

Sur le récipient 2 est fixé une capsule de distribution 65 comportant un couvercle rabattable 66 et un réducteur d'écoulement 67 traversé axialement par un passage 11, lequel peut être constitué par un trou ou une ou plusieurs fentes, par exemple.

La capsule 65 comporte un plateau 70 portant, du côté dirigé vers l'intérieur du récipient, une lèvre d'étanchéité 71 destinée à venir en appui contre la paroi intérieure du col 62.

Une jupe de montage 72, concentrique à la jupe 71, est encliquetée sur le col 62.

Le plateau 70 est pourvu d'une ouverture de distribution 73, délimitée par une paroi cylindrique 74 dirigée vers le haut.

Le couvercle 66 est relié au plateau 70 par une charnière-film 80.

Une lèvre annulaire d'étanchéité 81 est réalisée sur le couvercle 66, de manière à s'engager sur la paroi 74 lorsque le couvercle 66 est fermé.

Le réducteur d'écoulement 67 est logé dans l'espace intérieur délimité radialement par la lèvre d'étanchéité 71. Le réducteur d'écoulement 67 peut être, par exemple, collé par sa face supérieure sur le plateau 70.

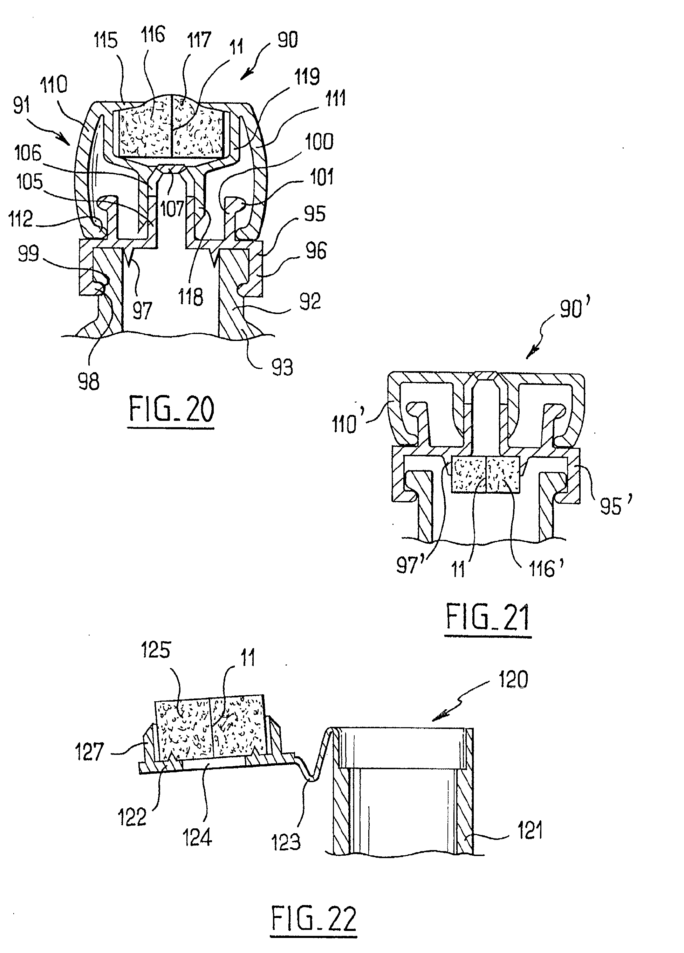

On a représenté, sur la figure 20, un dispositif 90 conforme à un autre exemple de mise en oeuvre de l'invention. Ce dispositif 90 comporte un récipient 93 à paroi compressible, muni à son extrémité supérieure d'un col 92 sur lequel est fixé par encliquetage un obturateur 91.

L'obturateur 91 comporte une partie inférieure 95 pourvue d'une jupe de montage 96 et d'une lèvre annulaire d'étanchéité 97 s'appliquant sur la paroi intérieure du col 92. La jupe de montage 96 comporte un bourrelet annulaire 98 apte à s'encliqueter dans une rainure annulaire 99 du col 92. La partie inférieure 95 comporte en outre une paroi tubulaire 100, dirigée vers le haut, comportant à son extrémité supérieure un bourrelet annulaire 101. La paroi 100 entoure une cheminée 105 comportant au voisinage de son extrémité supérieure des passages latéraux 106, cette cheminée 105 présentant une partie supérieure tronconique fermée par une paroi transversale 107.

L'obturateur 91 comporte également une partie supérieure 110, mobile par rapport à la partie inférieure 95, entre une position basse d'obturation et une position haute de distribution.

La partie supérieure 110 comporte une jupe extérieure 111, pouvant être déplacée axialement par l'utilisateur, comportant à son extrémité inférieure un bourrelet annulaire 112 s'engageant sous le bourrelet annulaire 101, la partie supérieure 110 étant ainsi retenue sur la partie inférieure 95.

La partie supérieure 110 comporte également une paroi transversale supérieure ajourée 115, sous laquelle est présent un réducteur d'écoulement 116. Ce dernier peut comporter, du côté situé vers l'extérieur du récipient, une protubérance 117 faisant saillie à travers l'ajour de la paroi 115. Cette dernière peut être réalisée verticale lors du moulage, puis être rabattue à chaud radialement vers l'intérieur, après la mise en place du réducteur d'écoulement, par exemple.

La partie supérieure 110 comporte encore une jupe d'obturation 118 apte à s'appliquer de manière étanche sur la cheminée 105 pour obturer les passages latéraux 106 lorsque l'obturateur 91 est dans sa position d'obturation, comme illustré à la figure 20.

La jupe 118 est reliée à la paroi transversale 115 par une paroi 119, traversée en son centre par un orifice tronconique, de forme adaptée à celle de l'extrémité supérieure de la cheminée 105.

Pour distribuer du produit, l'utilisateur soulève la partie supérieure 110. Le bourrelet annulaire 112 vient alors en appui contre le bourrelet annulaire 101 et la jupe 118 n'obture plus les passages 106, ce qui permet au produit contenu dans le récipient 93 de s'écouler à travers les passages 106 vers le réducteur d'écoulement 116.

Après utilisation, l'utilisateur repousse vers le bas la partie supérieure 110, afin de ramener l'obturateur 91 dans sa position d'obturation.

On a représenté, sur la figure 21, un dispositif 90' se différenciant du dispositif 90 de la figure 18 notamment par le fait que le réducteur d'écoulement 116' est fixé, non pas sur la partie supérieure 110' de l'obturateur, mais sur sa partie inférieure 95', à l'intérieur d'une lèvre 97'.

On a représenté, sur la figure 22, un dispositif 120 conforme à un autre exemple de mise en oeuvre de l'invention.

Le dispositif 120 comporte un col 121 communiquant avec l'intérieur d'un récipient, non représenté. Le col 121 est relié à une capsule 122 par l'intermédiaire d'une charnière-film 123. La capsule 122 comporte une jupe 127 apte à s'appliquer contre la paroi intérieure du col 121 lorsque la capsule 122 est en position fermée.

La capsule 122 reçoit un réducteur d'écoulement 125, du côté dirigé vers l'intérieur du récipient lorsqu'elle est en position fermée.

La capsule 122 comporte un orifice de distribution 124, dans lequel débouche le passage 11 traversant le réducteur d'écoulement 125.

La fixation du réducteur d'écoulement sur la capsule 122 permet de remplir aisément le récipient, par le col, lorsque la capsule est en position ouverte, comme illustré à la figure 22.

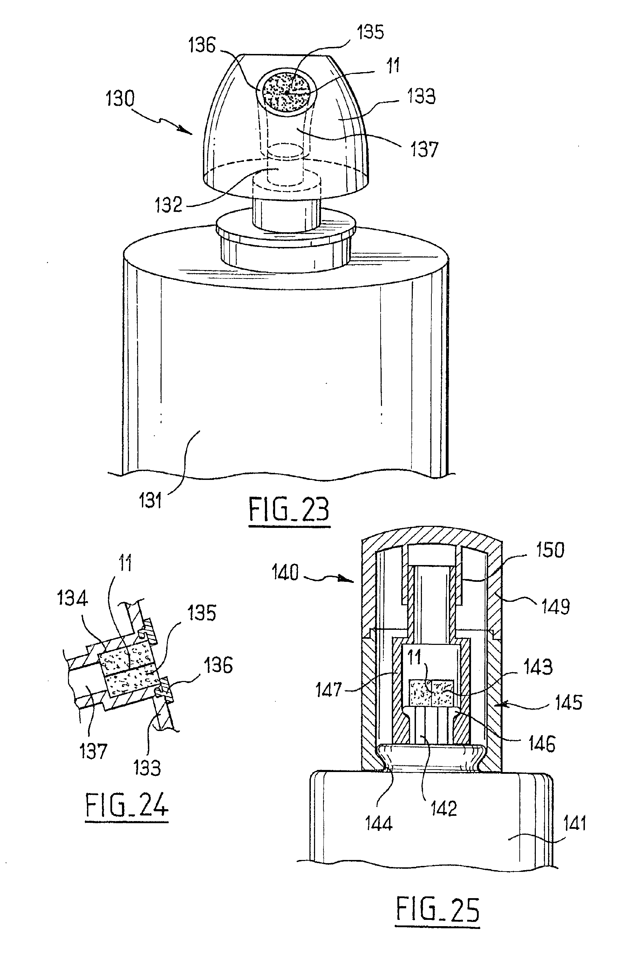

On a représenté, sur la figure 23, un dispositif 130 conforme à un autre exemple de mise en oeuvre de l'invention.

Ce dispositif 130 comporte un récipient 131 à paroi compressible, pourvu d'un embout 132 sur lequel est fixée une capsule de distribution 133.

Cette dernière comporte un logement 134, représenté en coupe sur la figure 22, destiné à recevoir un réducteur d'écoulement 135.

Le logement 134 communique avec l'embout 132 par l'intermédiaire d'un conduit 137 s'étendant à l'intérieur de la capsule 133.

Comme illustré à la figure 24, le réducteur d'écoulement 135 peut être retenu dans le logement 134 au moyen d'une bague 136 fixée, par encliquetage par exemple, sur la capsule 133.

On a représenté sur la figure 25 un dispositif 140 conforme à un autre exemple de mise en oeuvre de l'invention.

Ce dispositif 140 comporte un récipient 141 pourvu d'un col 142 muni d'un réducteur d'écoulement 143. Le récipient 141 comporte un étranglement 144 permettant la fixation d'une capsule 145.

Le col 142 comporte un bourrelet annulaire 146 permettant la fixation par encliquetage d'un embout de distribution 147.

La capsule 145 comporte un capuchon de fermeture 149 pourvu d'une jupe d'étanchéité intérieure 150 apte à s'appliquer sur l'embout 147.

Dans certains exemples de réalisation précédemment décrits, le réducteur d'écoulement se situe en retrait du bord d'une paroi rigide du dispositif et ne peut pas servir à l'application du produit.

Le réducteur d'écoulement peut, en variante, être réalisé de manière à pouvoir servir à l'application du produit, en venant au contact de la peau, par exemple.

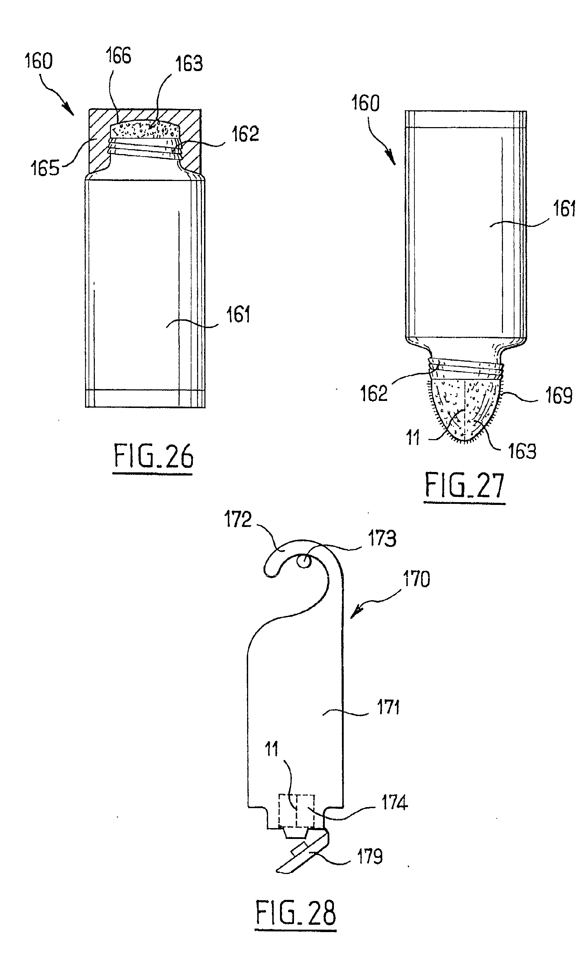

A titre d'exemple, on a représenté sur les figures 26 et 27 un dispositif 160 dans lequel le réducteur d'écoulement 163 est configuré de manière à pouvoir être amené au contact de la peau.

Le dispositif 160 comporte un récipient 161 en forme de tube, à paroi compressible, avec un col fileté 162 dans lequel est partiellement engagé le réducteur d'écoulement 163. Ce dernier est traversé par un passage 11.

Le récipient 161 peut être fermé par un capuchon 165 définissant une cavité intérieure 166 de volume inférieur à celui de la partie du réducteur d'écoulement 163 qui dépasse du col 162, de sorte que, lorsque le capuchon 165 est vissé sur le col 162, le réducteur d'écoulement 163 est comprimé et épouse la forme de la cavité 166.

Lorsque le capuchon 165 est retiré, pour une utilisation tête en bas par exemple, comme illustré à la figure 27, le réducteur d'écoulement 163 qui présente une mémoire de forme se détend et reprend sa forme initiale.

Le réducteur d'écoulement 163 peut comporter en surface un revêtement 169 tel qu'un flocage, un tissé ou un non-tissé, afin d'accroître le confort à l'application, par exemple.

On a représenté, sur la figure 28, un dispositif 170 conforme à un autre exemple de mise en oeuvre de l'invention.

Le dispositif 170 comporte un récipient 171 dont une extrémité est conformée en crochet 172, pour permettre d'accrocher le dispositif 170, tête en bas, à un support 173.

Le dispositif 170 comporte un réducteur d'écoulement 174 traversé par un passage 11, du côté opposé au crochet 172, le matériau du réducteur d'écoulement 174 étant agencé de manière à empêcher l'écoulement par gravité du produit.

Un capuchon de fermeture 179 relié au corps du récipient par une charnière-film par exemple peut être prévu, éventuellement, comme illustré, pour fermer l'orifice de sortie en l'absence d'utilisation.

Dans l'obturateur 91 décrit en référence à la figure 20, le passage de la position d'obturation à la position de distribution est obtenu par un déplacement axial d'une partie mobile.

En variante, le dispositif peut comporter un obturateur qui comprend une partie manoeuvrable en rotation, pouvant passer d'une position de fermeture à une position de distribution.

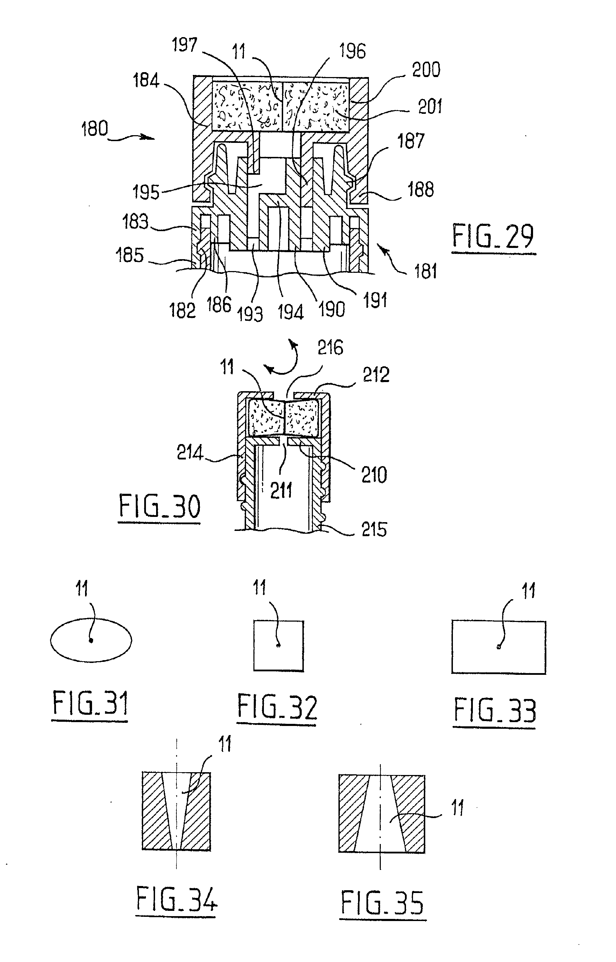

Pour illustrer cette possibilité, on a représenté, sur la figure 29, un dispositif 180 muni d'un mécanisme d'obturation 181 comportant une partie inférieure 183 destinée à être fixée sur le col 182 du récipient et une partie supérieure 184 pouvant tourner par rapport à la partie inférieure 183 entre une position de fermeture et une position de distribution.

La partie inférieure 183 comporte une jupe de montage 185 par exemple vissée sur le col 182, et une lèvre d'étanchéité 186 s'appliquant de manière étanche sur la surface intérieure du col 182.

La partie inférieure 183 comporte également une jupe intérieure 187 sur laquelle est encliquetée une jupe extérieure 188 de la partie supérieure 184.

La partie inférieure 183 comporte deux parois tubulaires concentriques 190 et 191 reliées entre elles par des ponts de matière ménageant entre eux des ouvertures 193, la paroi tubulaire la plus intérieure 190 étant fermée sensiblement à mi-hauteur par une paroi transversale 194, et comportant au-dessus de cette dernière une ouverture latérale 195.

La partie supérieure 184 comporte une paroi tubulaire 196 s'étendant entre les parois 190 et 191. Cette paroi tubulaire 196 présente une ouverture latérale 197 qu'il est possible de faire coïncider avec l'ouverture latérale 195 lorsque la partie supérieure 184 est en position de distribution, le produit circulant alors entre les parois 190 et 191, à travers les ouvertures latérales 195 et 197 et à l'intérieur de la paroi tubulaire 196 au-dessus de la paroi transversale 194.

Lorsque la partie supérieure 184 est dans sa position de fermeture, la paroi tubulaire 196 obture l'ouverture latérale 195 et le récipient est fermé.

La partie supérieure 184 définit un logement 200 permettant d'accueillir un réducteur d'écoulement 201, constitué par exemple par un bloc de mousse traversé par un passage 11.

Bien entendu, l'invention n'est pas limitée aux exemples qui viennent d'être décrits.

La cavité qui loge le réducteur d'écoulement peut présenter un volume fixe ou variable.

On a représenté à titre d'exemple sur la figure 30 une cavité à volume variable, définie entre une paroi 210 traversée par un orifice 211, constituant le fond de ladite cavité, et une paroi 212 appartenant à une bague 214, qui peut être plus ou moins vissée sur un col 215. La paroi 212 est traversée par un orifice 216. La paroi 210 peut être réalisée d'un seul tenant avec le col comme illustré, ou être constituée par une pièce rapportée, par exemple un insert engagé dans le col du récipient. En vissant plus ou moins la bague 214 sur le col 215, on comprime axialement plus ou moins le réducteur d'écoulement et l'on peut modifier ses propriétés vis-à-vis de l'écoulement du produit au moment de la distribution.

Le réducteur d'écoulement peut présenter une section transversale non symétrique de révolution. Cette section transversale peut, par exemple, présenter une forme ovale, carrée ou rectangulaire, comme cela est illustré aux figures 31 à 33, respectivement.

Le réducteur d'écoulement peut encore comporter, comme c'était par exemple le cas de l'exemple de la figure 7, une ou plusieurs faces recouvertes d'un revêtement de type flocage, tissé ou non-tissé.

On peut encore utiliser un récipient comportant un soufflet apte à être comprimé par l'utilisateur de manière à réduire le volume intérieur du récipient pour distribuer du produit.

Lorsque le passage 11 comporte au moins une fente, cette dernière peut présenter une largeur variable, et comporter par exemple des bords opposés convergeant ou divergeant vers la sortie, comme illustré sur les figures 34 et 35.

## Revendications

1. Dispositif de conditionnement d'un produit, notamment un produit cosmétique et/ou de soins, comprenant un récipient comportant une paroi élastiquement déformable permettant de faire varier son volume intérieur et un réducteur d'écoulement, **caractérisé par le fait que** le réducteur d'écoulement est réalisé au moins partiellement en un matériau compressible élastiquement déformable et comporte au moins un passage (11) sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution de produit.

2. Dispositif selon la revendication 1, **caractérisé par le fait que** le réducteur d'écoulement est apte à empêcher l'écoulement du produit par gravité lorsque le récipient est tête en bas.

3. Dispositif selon la revendication précédente, **caractérisé par le fait que** le réducteur d'écoulement comporte au moins un renfoncement (15, 16, 17) du côté de la sortie du produit ou du côté intérieur du récipient et dans lequel débouche ledit au moins un passage (11).

4. Dispositif selon la revendication précédente, **caractérisé par le fait que** ledit renfoncement (15 ; 17) présente une forme généralement conique, convergeant vers ledit au moins un passage (11).

5. Dispositif selon la revendication 3, **caractérisé par le fait que** ledit renfoncement (16) présente une forme généralement cylindrique, notamment cylindrique de révolution.

6. Dispositif selon l'une quelconque des trois revendications immédiatement précédentes, **caractérisé par le fait que** ledit renfoncement (15, 16) se situe du côté intérieur du récipient.

7. Dispositif selon l'une quelconque des revendications 4 à 6, **caractérisé par le fait que** ledit renfoncement (17) se situe du côté extérieur du récipient.

8. Dispositif selon l'une quelconque des revendications 3 à 5, **caractérisé par le fait que** le réducteur d'écoulement comporte deux renfoncements situés de part et d'autre dudit au moins un passage (11).

9. Dispositif selon l'une quelconque des revendications précédentes, **caractérisé par le fait que** le réducteur d'écoulement comporte, du côté extérieur du récipient, une protubérance (20) au sommet de laquelle débouche ledit au moins un passage.

10. Dispositif selon l'une quelconque des revendications précédentes, **caractérisé par le fait que** le réducteur d'écoulement comporte un trou unique (24).

11. Dispositif selon l'une quelconque des revendications 1 à 9, **caractérisé par le fait que** le réducteur d'écoulement comporte une fente unique (25).

12. Dispositif selon l'une quelconque des revendications 1 à 9, **caractérisé par le fait que** le réducteur d'écoulement comporte une pluralité de fentes (25) se coupant ou se rejoignant à une extrémité.

13. Dispositif selon la revendication précédente, **caractérisé par le fait que** le réducteur d'écoulement comporte au moins deux fentes (25) se croisant en leur milieu.

14. Dispositif selon la revendication 12, **caractérisé par le fait que** le réducteur d'écoulement comporte au moins trois fentes (25) ayant une extrémité commune, équi-angulairement réparties autour d'un axe (X) du réducteur d'écoulement.

15. Dispositif selon l'une quelconque des revendications 1 à 9, **caractérisé par le fait que** le réducteur d'écoulement comporte au moins une fente de largeur variable.

16. Dispositif selon l'une quelconque des revendications précédentes, **caractérisé par le fait que** ledit au moins un passage est réalisé sans enlèvement de matière.

17. Dispositif selon l'une quelconque des revendications précédentes, **caractérisé par le fait que** le réducteur d'écoulement est fixé par collage, soudage, serrage, bouterolage, directement ou au moyen d'une ou plusieurs pièces rapportées.

18. Dispositif selon la revendication précédente, **caractérisé par le fait que** le réducteur d'écoulement est fixé par une face (12) orientée transversalement à un axe (X) dudit au moins un passage, sur une paroi du support (8).

19. Dispositif selon la revendication précédente, **caractérisé par le fait que** ladite paroi (8) présente une nervure annulaire (29) engagée dans le réducteur d'écoulement (10).

20. Dispositif selon l'une quelconque des revendications précédentes, **caractérisé par le fait que** le réducteur d'écoulement (10) est constitué par un bloc de mousse.

21. Dispositif selon l'une quelconque des revendications 1 à 19, **caractérisé par le fait que** le réducteur d'écoulement comporte une structure multicouche.

22. Dispositif selon la revendication précédente, **caractérisé par le fait que** l'une au moins des couches (10a ; 10b ; 10c) de la structure multicouche présente une densité différente de celle des autres couches ou est réalisée dans un matériau différent de celui des autres couches.

23. Dispositif selon la revendication précédente, **caractérisé par le fait que** la couche (10a) la plus proche de l'orifice de sortie du produit est perméable à l'air.

24. Dispositif selon l'une quelconque des revendications précédentes, **caractérisé par le fait que** le réducteur d'écoulement définit une surface apte à servir à l'application du produit.

25. Dispositif selon l'une quelconque des revendications 1 à 22, **caractérisé par le fait que** le réducteur d'écoulement ne sert pas à l'application du produit.

26. Dispositif selon la revendication précédente, **caractérisé par le fait que** le réducteur d'écoulement (10) se situe en retrait d'une surface supérieure du dispositif.

27. Dispositif selon l'une quelconque des revendications précédentes, **caractérisé par le fait que** le réducteur d'écoulement (163) est apte à épouser la forme intérieure d'un bouchon (165) fermant le récipient.

28. Dispositif selon la revendication précédente, **caractérisé par le fait que** le réducteur d'écoulement (163) est comprimé lorsque le bouchon (165) est en place sur le récipient.

29. Dispositif selon l'une quelconque des revendications précédentes, **caractérisé par le fait que** le réducteur d'écoulement est fixé de manière inamovible, directement ou indirectement, sur le récipient.

30. Dispositif selon l'une quelconque des revendications précédentes, **caractérisé par le fait que** le réducteur d'écoulement est fixé sur un insert rapporté dans un col du récipient.

31. Dispositif selon l'une quelconque des revendications 1 à 29, **caractérisé par le fait que** le réducteur d'écoulement est fixé sur un support mobile par rapport au corps du récipient.

32. Dispositif selon la revendication précédente, **caractérisé par le fait que** le réducteur d'écoulement est fixé sur un élément d'obturation (110 ; 122 ; 184) mobile par rapport au corps du récipient.

33. Dispositif selon la revendication 32, **caractérisé par le fait que** l'élément d'obturation (110) est mobile entre une position première permettant au produit contenu dans le récipient de quitter ce dernier et une deuxième position empêchant le produit contenu dans le récipient de quitter ce dernier.

34. Dispositif selon la revendication précédente, **caractérisé par le fait que** le réducteur d'écoulement est situé en aval de l'élément d'obturation, eu égard au sens d'écoulement du produit.

35. Dispositif selon l'une quelconque des revendications précédentes, **caractérisé par le fait que** le récipient comporte un élément d'obturation mobile en rotation par rapport au corps du récipient, permettant d'interrompre ou non l'écoulement du produit contenu dans le récipient vers la sortie.

36. Dispositif selon l'une quelconque des revendications précédentes, **caractérisé par le fait que** le réducteur d'écoulement comporte une ou plusieurs faces recouvertes d'un revêtement (169) de type flocage, tissé ou non-tissé.

37. Dispositif selon l'une quelconque des revendications précédentes, **caractérisé par le fait que** le réducteur d'écoulement est perméable à l'air, de manière à permettre une reprise d'air.

38. Dispositif selon la revendication précédente, **caractérisé par le fait que** le réducteur d'écoulement est réalisé dans une mousse à cellules ouvertes.

39. Dispositif selon l'une quelconque des revendications précédentes, **caractérisé par le fait qu'**il comporte un espace (21) permettant une reprise d'air à travers une surface latérale (27) du réducteur d'écoulement.

40. Dispositif selon la revendication précédente, **caractérisé par le fait qu'**il comporte un espace annulaire libre autour du réducteur d'écoulement.

41. Dispositif selon l'une quelconque des revendications précédentes, **caractérisé par le fait que** le réducteur d'écoulement est fixé au récipient par une face (12) débouchant à l'extérieur du récipient.

42. Dispositif selon l'une quelconque des revendications précédentes, **caractérisé par le fait que** le récipient comporte une paroi (2a ; 211a) élastiquement déformable sur laquelle l'utilisateur peut appuyer pour réduire le volume intérieur du récipient.

43. Dispositif selon l'une quelconque des revendications précédentes, **caractérisé par le fait que** le récipient (2) présente une section transversale généralement allongée, par exemple de forme ovale.

44. Dispositif selon l'une quelconque des revendications précédentes, **caractérisé par le fait que** le récipient présente deux faces principales (2b ; 2c) sur lesquelles l'utilisateur peut appuyer pour réduire le volume intérieur dudit récipient.

45. Dispositif selon la revendication précédente, **caractérisé par le fait que** la déformabilité du récipient est suffisante pour que les portions de paroi définissant lesdites faces sont aptes à venir au contact l'une de l'autre lorsque l'utilisateur appuie à fond sur le récipient.

46. Dispositif selon l'une quelconque des revendications précédentes, **caractérisé par le fait que** le récipient comporte une capsule (122) reliée au corps du récipient par une charnière (123).

47. Dispositif selon l'une quelconque des revendications précédentes, **caractérisé par le fait que** le récipient présente une contenance comprise entre environ 50 ml et environ 600 ml, voire comprise entre environ 200 ml et environ 600 ml.

48. Dispositif selon l'une quelconque des revendications précédentes, **caractérisé par le fait que** le récipient contient l'un des produits suivants : un gel douche, un shampooing, un lait corporel, une huile.

49. Dispositif selon l'une quelconque des revendications précédentes, **caractérisé par le fait que** le réducteur d'écoulement contient une charge d'agents biocides.

50. Dispositif selon l'une quelconque des revendications précédentes, **caractérisé par le fait que** le réducteur d'écoulement contient une charge de particules magnétiques ou magnétisables.

51. Dispositif selon l'une quelconque des revendications précédentes, **caractérisé par le fait que** le réducteur d'écoulement est réalisé à partir d'une mousse de polyuréthane, de polyester, de polyéther, de PVC, de NBR, d'un feutre ou d'un composite.

52. Dispositif selon l'une quelconque des revendications précédentes, **caractérisé par le fait que** le réducteur d'écoulement est situé dans un logement de volume fixe.

53. Dispositif selon l'une quelconque des revendications précédentes, **caractérisé par le fait que** le réducteur d'écoulement est situé dans un logement de volume variable.

54. Dispositif de conditionnement d'un produit, notamment un produit cosmétique et/ou de soins, comprenant un récipient de volume intérieur variable et un réducteur d'écoulement, **caractérisé par le fait que** le réducteur d'écoulement est réalisé au moins partiellement en un matériau compressible élastiquement déformable perméable à l'air et comporte au moins un passage (11) sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution de produit.

55. Dispositif de conditionnement d'un produit, notamment un produit cosmétique et/ou de soins, comprenant un récipient de volume intérieur variable et un réducteur d'écoulement, **caractérisé par le fait que** le réducteur d'écoulement est réalisé au moins partiellement en un matériau compressible élastiquement déformable et comporte au moins un passage (11) sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution de produit, et **par le fait que** le dispositif comporte un espace annulaire entourant le matériau compressible du réducteur d'écoulement sur une partie au moins de sa hauteur.

56. Dispositif selon la revendication 55, le récipient comportant un col, **caractérisé par le fait que** l'espace annulaire est situé entre le matériau compressible et le col du récipient.

57. Dispositif selon la revendication 55, le récipient comportant un col, **caractérisé par le fait que** l'espace annulaire est situé entre le matériau compressible et la paroi d'un insert introduit dans le col du récipient.

58. Dispositif de conditionnement d'un produit, notamment un produit cosmétique et/ou de soins, comprenant un récipient de volume intérieur variable et un réducteur d'écoulement, **caractérisé par le fait que** le réducteur d'écoulement est réalisé au moins partiellement en un matériau compressible élastiquement déformable et comporte au moins un passage (11) sensiblement fermé en au moins un point de sa longueur au repos, apte à s'élargir par compression dudit matériau sous l'effet de la pression du produit lorsque le volume intérieur du récipient est réduit en réponse à une action de l'utilisateur, de manière à permettre la distribution de produit, et **par le fait que** le réducteur d'écoulement est fixé au reste du dispositif de manière à ne pas limiter sa compressibilité sous l'effet de la pression du produit.
